# EUROPEAN PATENT APPLICATION

(11) **EP 4 838 444 A1**
(43) Date of publication of application: **11.11.2026**
(21) Application number: 25300057.4
(22) Date of filing: 07.05.2025
(51) Int. Cl.: G06Q 20/22, G06Q 20/32, G06Q 20/36, G06Q 20/38, G06Q 20/40

(54) **INTERACTION RATES**

(71) Applicant: Mastercard International, Inc., Purchase, NY 10577 (US)
(72) Inventor: Campbell, Brandon, Decatur (US); Petsanis, Emmanouil, London (GB); Flowerdew, Thomas, Filby (GB)
(74) Representative: Barker Brettell LLP

(57) **Abstract**

The present invention relates to methods and systems for detecting an anomalous activity in a financial transaction system. There is provided a computer implemented method (500) for detecting an anomalous activity in a financial transaction system (200). The method (500) comprises: receiving (502) transaction details (113) for a first transaction between a first entity (210) and a second entity (220), the transaction details (113) comprising a first entity identifier and a second entity identifier; comparing the second entity identifier to a database (130) representing previous transactions associated with the first entity identifier and determining whether the first entity (210) has interacted with the second entity (220) previously; determining a first probabilistic unique interaction rate for the first entity, the first probabilistic unique interaction rate representing a probability that the first entity (210) interacts with a new entity in a first time period, the first probabilistic unique interaction rate being based at least in part on the determination of whether the first entity (210) has interacted with the second entity (220) previously; and determining a likelihood parameter indicating the likelihood that the first transaction is anomalous based at least in part on the first probabilistic unique interaction rate.

## Description

### TECHNICAL FIELD

The present invention relates to methods and systems for detecting anomalous activity in a financial transaction system.

### BACKGROUND

A crucial aspect of any financial transaction system is the ability to detect and act upon anomalous activity. In particular, financial institutions have a responsibility to their customers to mitigate against fraud.

However, in order to detect anomalous activity, it is nearly always necessary to determine an ordinary or normal baseline. For example, to detect that a consumer is attempting to initiate a transaction for an unusually large amount, a mean or average transaction amount for the consumer must be known/calculated.

This is just one very simplistic example. When trying to analyse more complex parameters (or 'signals' within the data) and patterns in activity, existing methods can quickly become impractical. Across a financial transaction system, millions of transactions may be made every hour, involving many different entities, transaction types and risks. The computational requirements for storing transaction information over the course of months or years, so that baselines can be established, would be substantial. Likewise, the computation resources needed to retrieve historical data, process it, and then compare it to a new transaction of interest can soon become unfeasible.

Thus, there is significant interest in developing more efficient and/or effective methods and systems for detecting anomalous activity in financial transaction system, particularly those that are capable of analysing more complex signals or patterns of activity over longer time periods.

### SUMMARY

According to an aspect of the invention, there is provided a computer implemented method for detecting an anomalous activity in a financial transaction system, the computer implemented method comprising:
receiving, at an interaction rate module, transaction details for a first transaction between a first entity and a second entity, the transaction details comprising a first entity identifier and a second entity identifier;
comparing, using the interaction rate module, the second entity identifier to a database representing previous transactions associated with the first entity identifier and, using the interaction rate module, determining whether the first entity has interacted with the second entity previously;
determining, using the interaction rate module, a first probabilistic unique interaction rate for the first entity, the first probabilistic unique interaction rate representing a probability that the first entity interacts with a new entity in a first tim e period, the first probabilistic unique interaction rate being based at least in part on the determination of whether the first entity has interacted with the second entity previously; and
determining, using an anomalous activity module, a likelihood parameter indicating the likelihood that the first transaction is anomalous based at least in part on the first probabilistic unique interaction rate.

Utilising a probabilistic unique interaction rate may provide for an efficient means for detecting anomalous activity in a financial transaction system. The first probabilistic unique interaction rate may be representative of a plurality of transactions th at the first entity has been involved in previously and the unique entities that they have interacted with. Thus, the first probabilistic unique interaction rate may provide information regarding patterns of behaviour of the first entity over a period of time. This may be more informative than 'raw' information that can be obtained directly from the transaction details of the first transaction. For example, a monetary amount associated with the first transaction may be compared to an average monetary amount, but a singular data point may not be able to provide as much insight as a probabilistic unique interaction rate. The database representing previous transactions associated with the first entity identifier may be part of a larger database of previous transactions involving many entities. Said database may be searched using the first entity identifier to retrieve the corresponding transactions that the second entity identifier is compared to. The previous transactions associated with the first entity identifier may be regarded as previous transactions involving the first entity.

"Activity" is used herein to refer to any suitable action that may be performed as part of a financial transaction system. For example, an activity may comprise the first entity (e.g., a consumer) initiating an in-store card payment with the second entity (e.g., a merchant). An activity may comprise the first entity placing an order with the second entity via an internet-based commerce portal. An activity may comprise transferring or requesting money from another entity, such as when transferring money via a payment application or withdrawing physical money. Although the activity is referred to as part of a financial transaction system, it is not necessary for the activity to involve transfer of financial currency at the time of the first transaction. For example, the activity could involve an order being placed for goods or services wherein financial details are provided (e.g., a bank account or card number). However, money may not actually be transferred until a later time when those goods and services have been finalised/delivered. Nonetheless, the methods and systems herein may be used to detect an anomaly at the point that the initial order is made.

An "anomalous activity" in the context of the invention may be any activity that is considered to be out of the ordinary or undesirable. The anomalous activity may be intentional. The methods and systems of the present invention may be used to detect and reduce/prevent fraudulent transactions. i.e., wherein one entity is attempting to defraud the other entity. Additionally, or alternatively, the methods and systems of the present invention may be used to detect and reduce/present unintentional anomalies. For example, an accident or a failure in a payment system may result in erroneous transactions being initiated. This may result in an anomalous increase in the first probabilistic unique interaction rate, which could then be acted upon accordingly.

The transaction details may be comprised in a first transaction request message associated with the first transaction. The method may further comprise:
determining, based on the likelihood parameter, whether to allow the first transaction to be completed;
if it is determined that the first transaction should not be completed, generating, using the anomalous activity module, a first transaction response message comprising an instruction to prevent the first transaction; and/or
if it is determined that the first transaction should be completed, generating, using the anomalous activity module, a first transaction response message comprising an instruction to proceed with the first transaction.

By using the anomalous activity detection method of the present invention, anomalous/fraudulent transactions may be reduced or prevented. The method may be implemented by a payment processor (e.g., Mastercard Inc.) or facilitator, for example. The payment processor may be a card payment processor that communicates with parties involved in conventional card payment transactions (e.g., the merchant, consumer, and/or their respective financial institutions). The first transaction request message may be received at the payment processor from the merchant (via an acquirer of the merchant, for example). The payment processor may then utilise the method of the present invention to determine, based on the likelihood parameter, whether to allow the first transaction to be completed. The first transaction response message may be sent to merchant (or their acquirer), instructing them to prevent or proceed with the first transaction - this may reduce the likelihood that a merchant is defrauded by a fraudulent consumer. Additionally, or alternatively, the first transaction response message may be sent to the consumer (or an issuer; an issuing bank acting on behalf of the consumer) instructing them to prevent or proceed with the transaction - this may reduce the likelihood that the consumer is defrauded by a fraudulent merchant.

The 'instruction' may be a binary instruction, e.g., prevent or proceed with the transaction. Alternatively, the 'instruction' may be the likelihood parameter itself. The acquirer or the issuer, for example, may determine for themselves whether to allow the first transaction to be completed. Acting upon the instruction may be automatic. For example, where the first transaction is conducted physically in store using a payment terminal and where it is determined that the first transaction should not be completed, the payment terminal may indicate that the transaction has been blocked. Alternatively, acting upon the instruction may be manual. For example, where the first transaction is conducted online and where it is determined that the first transaction should not be completed, the consumer may be provided with an indication that the first transactio n appears to be suspicious and may be prompted to cancel the first transaction.

Determining the first probabilistic unique interaction rate for the first entity may comprise calculating a first exponential decay rate.

An interaction rate could be determined algebraically. For example, using knowledge of historic transactions, one could find that the first entity has interacted with A unique entities in the time period B, meaning the unique interaction rate for the first entity would be A/B. However, as discussed further below, an algebraic calculation of this type may require that all transactions in a given time period must be stored, so that the unique interaction rate can be determined and updated. By contrast, use of an exponential decay rate may reduce the amount of information that must be stored. By determining the unique interaction rate probabilistically, only a single exponential decay rate value may be stored and updated with each transaction.

The computer implemented method may further comprise retrieving, using the interaction rate module, a first previous exponential decay rate from the database representing previous transactions associated with the first entity identifier. Calculating the first exponential decay rate may comprise updating the previous exponential decay rate to reflect the first transaction.

Depending upon whether the second entity is a new, unique interaction (i.e., whether the first entity has interacted with the second entity previously), the stored exponential decay rate can be updated accordingly. Thus, the first probabilistic unique interaction rate can be iteratively kept up to date by updating just a single, stored value ; as opposed to storing a list of all unique interactions, for example.

The method may further comprise retrieving, using the interaction rate module, a first previous update time from the database representing previous transactions associated with the first entity identifier, the first previous update time indicating when the first previous exponential decay rate was last updated. The transaction details for the first transaction may comprise a first transaction time indicating when the first transaction occurred. The first exponential decay rate may be calculated based upon a ratio of a first elapsed time and the first time period, the first elapsed time being the difference between the first previous update time and the first transaction time.

By utilising the previous update time associated with the first exponential decay rate and the first transaction time (the transaction time may be provided as a field in a transaction request message, for example), the amount of time elapsed since the first exponential decay rate was last updated can be calculated. Evidently, the elapsed time is related to the unique interaction rate - if the elapsed time is large, the first entity has not interacted with a new entity for a long time period, whereas if the elapsed time is small, the first entity has interacted with a new entity recently. Comparing this elapsed time to the chosen first time period within the exponential decay function thus provides a representation that the first entity has interacted with a new, unique entity in said time period.

The first exponential decay rate may be calculated using an exponential decay function of the form y' *= x* + *y**exp(-Δ*t* / *T*₁), wherein y' is the first exponential decay rate, *x* is a value indicating whether the first entity has interacted with the second entity previously, y is the first previous exponential decay rate, Δ*t* is the first elapsed time and *T*₁ is the first time period.

Such a function may provide a convenient way to calculate and update the first exponential decay rate, based upon the parameters discussed above. However, this is just one example of such a function; additional variables may be introduced so that the function behaves as desired. For example, where it is known that the first elapsed time Δ*t* is typically overestimated (e.g., due to some transactions not being captured), the ratio between Δ*t* and the first time period *T*₁ may be adjusted.

The computer implemented method may further comprise determining, using the interaction rate module, a second probabilistic unique interaction rate for the first entity, the second probabilistic unique interaction rate representing a probability that the first entity interacts with a new entity in a second time period, the second probabilistic unique interaction rate being based at least in part on the determination of whe ther the first entity has interacted with the second entity previously, wherein the first time period and the second time period are different. The likelihood parameter may be based at least in part on the second probabilistic unique interaction rate.

Determining and utilising a plurality of probabilistic unique interaction rates for the first entity (more than two probabilistic unique interaction rates for the first entity may be determined similarly to above) may improve the accuracy with which anomalous activity can be detected. For example, a probabilistic unique interaction rate for the previous 7 days and a probabilistic unique interaction rate for the previous 30 days may be determined, which may provide an insight into the entity's interactions over the past week vs the past month. Unique interactions within the previous 7 days will generally be a subset of the unique interactions within the previous 30 days. Thus, if the ratio of the 7-day rate and the 30-day rate is close to 1, this may indicate an anomaly, as most/all of the unique interactions occurring within the previous 30 days have occurred in the previous 7 days. One may expect the rate of unique interactions to instead be relatively uniform.

Determining whether the first entity has interacted with the second entity previously may comprise retrieving a status of a first entity Bloom filter from the database representing previous transactions associated with the first entity identifier, wherein the first entity Bloom filter represents a set of entities that the first entity has previously interacted with.

Determining whether the first entity has interacted with the second entity previously could be done using a lookup function, for example. The database may comprise data for all historic transactions involving the first entity/associated with the first entity identifier (or at least all transactions within a given historic time period). For example, where the first entity is a consumer, the database may comprise a list of all transactions conducted by the consumer, including time of transaction, transaction amount and merchant details (e.g., a bank account or card number for the merchant). Thus, where in the first transaction the second entity identifier is a bank account number, the database may be looked up to see whether said bank account has interacted with the consumer previously.

However, this lookup-based searching may have limitations. Firstly, the database must store all historic transactions involving the first entity (or for, example, two years of transactions). For an entity such as a large online retailer, this may be millions of transactions that must be stored. Secondly, for each transaction, the list of historic transactions involving the first entity must be loaded into memory so that the lookup function can be performed. Again, this may involve loading and searching many transactions.

A Bloom filter may be an efficient data structure for determining whether the first entity has interacted with the second entity previously. A Bloom filter is a probabilistic representation of the elements of a set; in this case, the entities that the first entity has interacted with previously. By querying the Bloom filter with an appropriate second entity identifier (e.g., checking to see if a bank account is within a Bloom filter representing bank accounts that the first entity has interacted with previously), the Bloom filter can determine with certainty that the second entity identifier is not in the set of identifiers represented by the Bloom filter. In other words, by its nature, the Bloom filter cannot provide false negatives when searching for a particular identifier in the set. Thus, the transaction with the second entity would be determined to be a new unique interaction. As discussed further below, a Bloom filter may provide false positives; the many-to-one data structure of a Bloom filter may mean that a second entity identifier is in the set, when in fact bits representing said second entity identifier just happen to be filled by other identifiers. Nonetheless, the Bloom filter may still provide a suitable means for comparing unique interactions, particularly where the Bloom filter is configured appropriately to minimise the likelihood of false positives as discussed further below. Furthermore, it may be possible for a second entity identifier to be considered unique when the underlying entity is not unique. For example, a consumer may use a different or new bank account/payment card - an identifier based on the account/card may be new and unique, even if the consumer has been seen before. This may be mitigated by using a plurality of second entity identifiers as discussed herein.

The status of the first entity Bloom filter may be a 1 if the first entity has not previously interacted with the second entity. The status of the first entity Bloom filter is a 0 otherwise. The status of the first entity Bloom filter may be used as the value, x, indicating whether the first entity has interacted with the second entity previously in the exponential decay function.

The result of querying the Bloom filter (a 1 or a 0) may be used to update the exponential decay function discussed above. In this way, the exponential decay function is incremented so as to account for a new, unique interaction. Thus, the first exponential decay rate is continuously updated as new entities interact with the first entity. Therefore, by updating just a single number, the first probabilistic unique interaction rate can be kept up to date without the need to process/store each new transaction or unique interaction.

The computer implemented method may further comprise, if the status of the first entity Bloom filter is 1, updating the first entity Bloom filter to include the second entity identifier.

As discussed above, the first entity Bloom filter is a probabilistic representation of the entities that the first entity has interacted with previously. Thus, when a new entity interacts with the first entity, this new entity may be added to the Bloom filter so that the Bloom filter contains the set of all unique entities (as represented by their entity identifier).

The status of the first entity Bloom filter may be used in determining both the first probabilistic unique interaction rate and the second probabilistic unique interaction rate.

As discussed above, two or more probabilistic unique interaction rates may be determined for different time periods. However, for both time periods, the status of whether the first entity has interacted with the second entity previously will be the same. The 1 or 0 result of the Bloom filter may be used as the value x in both exponential decay functions.

The first entity Bloom filter may be a scalable Bloom filter.

Generally, the Bloom filters of the present invention may sized appropriately dependent upon the longer of the first time period or the second time period in question. Bloom filters are initialised with a finite amount of storage and the probability of a false positive increases as more information is stored in the filter. Thus, the Bloom filter may be configured to provide a desired or acceptable false positive rate. For example, if a 30-day probabilistic unique interaction rate and a 2 -year probabilistic unique interaction rate are desirable, the Bloom filter may be configured to store 2 -years' worth of interactions. The Bloom filter may be configured based upon a sample of data, the sample of data being used to determine the average amount of interactions over all entities in the dataset, and thus the expected storage requirements of the Bloom filter for the time period. However, the Bloom filters may be resized during operation to avoid the increase in false positives associated with finite storage size. The resizing may be done manually. The Bloom filter may be an automatic resizing Bloom filter/a scalable Bloom filter configured to automatically request further storage resources when predetermined storage capacity is reached. A suitable Bloom filter algorithm may be used.

The computer implemented method may further comprise:
comparing the first entity identifier to a database representing previous transactions associated with the second entity identifier and, using the interaction rate module, determining whether the second entity has interacted with the first entity previously; and
determining, using the interaction rate module, a third probabilistic unique interaction rate for the second entity, the third probabilistic unique interaction rate representing a probability that the second entity interacts with a new entity in a third time period, the third probabilistic unique interaction rate being based at least in part on the determination of whether the second entity has interacted with the first entity previously;
wherein the likelihood parameter is based at least in part on the third probabilistic unique interaction rate.

As discussed above, the method comprises comparing the second entity identifier to a database representing previous transactions associated with the first entity identifier and then determining the first probabilistic unique interaction rate (representing the probability that the first entity interacts with a new entity in a first time period). However, in a similar way, the method may comprise the opposite function wherein the second entity identifier is compared to a database representing previous transactions associated with the first entity identifier. This may be done using the same methods discussed above.

Determining probabilistic unique interaction rates for both entities may further improve the likelihood that anomalous activity is detected. For example, a probabilistic unique interaction rate for the first entity (e.g., a consumer) may be 'normal'; e.g., the interaction of the consumer with a second entity (e.g., a merchant) may be within the typical interaction rate. However, a corresponding probabilistic unique interaction rate for the merchant may be anomalous; e.g., the merchant may be interacting with an unusually high number of other entities, including the consumer.

The first entity may be a consumer, and the second entity may be a merchant, or vice versa.

The methods of the present invention may thus be used to detect anomalous purchase transactions between the consumer and merchant (e.g., an in-store/physical purchase, a purchase conducted via telephone, or a purchase conducted electronically online/via and app/etc.). However, the present invention may be applied to any suitable financial transaction system. For example: the first/second entity may be a bank or a financial institution, the method being used to detect anomalous withdrawals or deposits; the first/second entity may be credit provider, the method being used to detect anomalous usage of or applications for credit facilities; and/or the first/second entity may be a currency exchange, the method being used to detect anomalous exchanges of foreign currencies.

The first entity identifier and/or a second identifier may be an account number or similar associated with an account of the first entity and/or the second entity respectively.

Using an account number or similar information associated with an account of the first and/or second entity may provide a convenient way to detect anomalous activity. It may be of particular interest to assess the rate with which one bank account (e.g., a bank account of a merchant) interacts with new bank accounts (e.g., bank accounts belonging to customers). The first entity identifier and/or a second identifier may be a bank account number (and optionally a sort code) or a card number, for example.

However, the methods of the present invention may be used with any identifier that can be used to identify the first entity or second entity. For example: the identifier could be a name or a username that identifies a particular person or business; the identifier may be contact information such as an email address, a telephone number or an address, said contact information being provided by an entity during the transaction (e.g., as part of an online transaction) which may be used to identify the entity; and/or the identifier may be related to a piece of hardware involved in the transaction such as a payment terminal or a smartphone (e.g., a serial number, an International Mobile Subscriber Identity (IMSI) or an International Mobile Equipment Identity (IMIE), said identifier thus identifying an entity based upon the hardware that they use to conduct transactions. The identifier may not be specific to an individual entity but may still provide information about the entity. For example, the identifier may be a payment method used by an entity (e.g., a payment made using a particular app), a geographic location (e.g., a town or a country) associated with the entity, or a financial currency used in the transaction by the entity. Using the methods of the present invention with such an identifier may still enable detection of anomalous activity - e.g., an unusually high probabilistic unique interaction rate with different/unique payment methods, locations or currencies may indicate anomalous behaviour.

The transaction details for the first transaction may comprise a plurality of second entity identifiers. The method may further comprise:
comparing each of the second entity identifiers to the database representing previous transactions associated with the first entity identifier and, using the interaction rate module, individually determining whether the first entity has interacted with the second entity previously based on each of the second identity identifiers; and
determining, using the interaction rate module, a plurality of probabilistic unique interaction rates for the first entity, each probabilistic unique interaction rate representing a probability that the first entity interacts with a new entity in a predetermined time period, the each probabilistic unique interaction rate being based at least in part on the determination of whether the first entity has interacted with the second entity previously based on the respective second entity identifier of the plurality of second entity identifiers; and
wherein the likelihood parameter is based at least in part on each probabilistic unique interaction rate of the plurality of probabilistic unique interaction rates.

Utilising a plurality of second entity identifiers may further improve the likelihood that anomalous activity is detected. For example, using a primary second entity identifier (e.g., a bank account number), a probabilistic unique interaction rate for the first entity may be 'normal'. However, using a secondary second identity identifier (e.g., an email address), the probabilistic unique interaction rate for the first entity may be anomalous. In this example, the second entity (e.g., a merchant) may have used just one bank account for transactions. However, the database representing previous transactions associated with the first entity identifier may contain multiple different email addresses that have been used by the second entity previously. Therefore, by using a plurality of identifiers, the method of the present invention may be able to more accurately determine the rate of interaction with unique entities. Likewise, the transaction details may comprise a plurality of first entity identifiers which may enable the first entity to be more accurately identified.

The plurality of second identity identifiers may comprise:
an email address associated with the second entity;
a transaction currency associated with the second entity;
a payment method associated with the second entity; and/or
a geographic location associated with the second entity.

As discussed above, these alternative identifiers may be used to also identify entities. These alternatives may provide a suitable secondary identifier to complement a primary identifier (e.g., a bank account number or a card number).

The method may further comprise:
receiving, at the interaction rate module, transaction details for a second transaction between the first entity and a third entity entity, the transaction details comprising the first entity identifier and a third entity identifier;
comparing the third entity identifier to the database representing previous transactions associated with the first entity identifier and, using the interaction rate module, determining whether the first entity has interacted with the third entity previously;
determining, using the interaction rate module, a fourth probabilistic unique interaction rate for the first entity, the fourth probabilistic unique interaction rate representing a probability that the first entity interacts with a new entity in a first time period, the fourth probabilistic unique interaction rate being based at least in part on the determination of whether the first entity has interacted with the third entity previously; and
determining, using the anomalous activity module, a second likelihood parameter indicating the likelihood that the second transaction is anomalous based at least in part on the fourth probabilistic unique interaction rate.

The methods of the present invention may thus provide an iterative process. As discussed above, the database(s) (e.g., the Bloom filter status) and the probabilistic unique interaction rate(s) (e.g., the exponential decay rate) may be updated with each unique interaction. Thus, subsequent transactions can also be analysed for anomalous activity. Any of the features discussed above in relation to the first transaction/second entity can also be applied to the second transaction/third entity and any subsequent transactions/entities.

The anomalous activity module may comprise a machine learning model trained to determine the likelihood that a transaction is anomalous based upon parameters of the transactions and/or the entities involved therein, the parameters including the first probabilistic unique interaction rate.

Machine learning may provide an effective way to detect anomalous activity. The machine learning model may be a classifier-type model trained to classify the transaction as either anomalous or non-anomalous/normal based upon the parameters. The model may be trained using supervised or semi-supervised training, whereby the model is provided with labelled data (e.g., transactions that are known to be anomalous or normal). The machine learning model may be implemented using any suitable machine learning architecture, for example a convolutional neural network (CNN).

The first probabilistic unique interaction rate may be provided to the machine learning model as part of a first transaction feature vector.

The skilled person will understand that a feature vector can be provided to a machine learning model, the feature vector being a vectorised representation of features of the underlying data (in this instance, features of the transaction) that the machine 1 earning model is configured to act upon. In its simplest form, the vector representation may be a list of fields with corresponding values. The determined value of the first probabilistic unique interaction rate may be provided in such a vector representation. Whe re a plurality of probabilistic unique interaction rates are determined, as discussed above, these may each be included in the feature vector.

The first transaction feature vector may comprise one or more additional parameters of the transactions and/or the entities involved therein that have been determined in parallel to the first probabilistic unique interaction rate.

In addition to the first (and second, etc.) probabilistic unique interaction rate, the machine learning model may be trained to analyse a variety of additional parameters. These additional parameters may include any features that are typically of interest, e.g., the average amount of currency spent by an entity/account thereof over a given time period, or the age of the account in question. Thus, the methods of the present invention may be used to improve the accuracy of any existing fraud-detection model. The probabilistic unique interaction rates discussed herein may be calculated and added to a feature vector that is provided to a known machine learning model. Thus, the probabilistic unique interaction rate feature may be regarded as a subset of features that can be used to supplement and improve traditional methods of fraud detection.

According to another aspect of the invention, there is provided a device for detecting an anomalous activity in a financial transaction system, the device comprising:
an interaction rate module configured to:
   receive transaction details for a first transaction between a first entity and a second entity, the transaction details comprising a first entity identifier and a second entity identifier;
   compare the second entity identifier to a database representing previous transactions associated with the first entity identifier and determine whether the first entity has interacted with the second entity previously; and
   determine a first probabilistic unique interaction rate for the first entity, the first probabilistic unique interaction rate representing a probability that the first entity interacts with a new entity in a first time period, the first probabilistic unique interaction rate being based at least in part on the determination of whether the first entity has interacted with the second entity previously; and
an anomalous activity module configured to:
   determine the likelihood that the first transaction is anomalous based at least in part on the first probabilistic unique interaction rate.

The device may be configured to perform a computer implemented method according to an aspect of the invention.

According to another aspect of the invention, there is provided a system for processing financial transactions, the system comprising:
a payment terminal configured to generate transaction details for a first transaction between a first entity and a second entity conducted via the payment terminal, the transaction details comprising a first entity identifier and a second entity identifier;
a payment module configured to determine whether financial transactions can be completed, the payment module comprising a device for detecting an anomalous activity in a financial transaction system, the device comprising:
   an interaction rate module configured to:
      receive transaction details for a first transaction between a first entity and a second entity, the transaction details comprising a first entity identifier and a second entity identifier;
      compare the second entity identifier to a database representing previous transactions associated with the first entity identifier and determine whether the first entity has interacted with the second entity previously; and
      determine a first probabilistic unique interaction rate for the first entity, the first probabilistic unique interaction rate representing a probability that the first entity interacts with a new entity in a first time period, the first probabilistic unique interaction rate being based at least in part on the determination of whether the first entity has interacted with the second entity previously; and
   an anomalous activity module configured to:
      determine the likelihood that the first transaction is anomalous based at least in part on the first probabilistic unique interaction rate; and
a payment network configured to communicate the transactions details from the payment terminal to the payment module.

The device for detecting an anomalous activity may be according to an aspect of the invention. The anomalous detection activity methods and systems discussed herein may be implemented in any suitable financial transaction system and therefore used to detect anomalous activity therein.

For example, the payment terminal may be a point-of-sale terminal that is capable of initiating in-person card payment transactions (e.g., in a shop or other retail establishment). Alternatively, the payment terminal may be a smartphone equipped with a payment application, enabling the user to initiate transactions (e.g., pay for services or transfer currency). Alternatively, the payment terminal may comprise an internet-based payment terminal, such that transactions can be initiated online (e.g., via an e-commerce platform).

The payment network may be any suitable payment network that is configured for initiating and processing financial transactions. As discussed above, the methods and systems may be used as part of any suitable financial transaction system. The payment network may be a debit and/or credit card payment system, for example. The methods and systems herein may involve the use of one or more third parties. For example, payment terminal infrastructure may be operated by third party and the payment network may be operated by another third party. The payment network may operate/control the payment module. For example, the payment network may utilise the anomalous activity detection discussed herein alongside other processes involved in processing the transaction (e.g., confirming the identities of either entity, checking that an entity has sufficient funds to complete the transaction and/or communicating with other parties to arrange settlement of the transaction).

According to another aspect of the invention, there is provided a non-transitory computer-readable medium comprising instructions which, when executed by a computer, cause the computer to carry out a method for detecting an anomalous activity in a financial transaction system, the method comprising:
receiving, at an interaction rate module transaction details for a first transaction between a first entity and a second entity, the transaction details comprising a first entity identifier and a second entity identifier;
comparing, using the interaction rate module, the second entity identifier to a database representing previous transactions associated with the first entity identifier and, using the interaction rate module, determining whether the first entity has interacted with the second entity previously;
determining, using the interaction rate module, a first probabilistic unique interaction rate for the first entity, the first probabilistic unique interaction rate representing a probability that the first entity interacts with a new entity in a first time period, the first probabilistic unique interaction rate being based at least in part on the determination of whether the first entity has interacted with the second entity previously; and
determining, using an anomalous activity module, a likelihood parameter indicating the likelihood that the first transaction is anomalous based at least in part on the first probabilistic unique interaction rate.

The non-transitory computer-readable medium may comprise instructions which, when executed by a computer, cause the computer to carry out a computer implemented method according to an aspect of the invention.

According to another aspect of the invention, there is provided a computer program product comprising instructions which, when the program is executed by a computer, cause the computer to carry out a method for detecting an anomalous activity in a financial transaction system, the method comprising:
receiving, at an interaction rate module transaction details for a first transaction between a first entity and a second entity, the transaction details comprising a first entity identifier and a second entity identifier;
comparing, using the interaction rate module, the second entity identifier to a database representing previous transactions associated with the first entity identifier and, using the interaction rate module, determining whether the first entity has interacted with the second entity previously;
determining, using the interaction rate module, a first probabilistic unique interaction rate for the first entity, the first probabilistic unique interaction rate representing a probability that the first entity interacts with a new entity in a first tim e period, the first probabilistic unique interaction rate being based at least in part on the determination of whether the first entity has interacted with the second entity previously; and
determining, using an anomalous activity module, a likelihood parameter indicating the likelihood that the first transaction is anomalous based at least in part on the first probabilistic unique interaction rate.

The computer program product may comprise instructions which, when the program is executed by a computer, cause the computer to carry out the method according to an aspect of the invention.

### DESCRIPTION OF FIGURES

Embodiments of the invention will be described, purely by way of example, with reference to the accompanying drawings, in which:
Figure 1 shows a schematic diagram of a system for processing financial transactions, the said system comprising a device for detecting anomalous activity, according to the present invention;
Figure 2 shows a schematic diagram of the operation of an interaction rate module according to the present invention;
Figure 3 shows an illustration of an example Bloom filter;
Figure 4 shows a schematic diagram of the operation of an anomalous activity module according to the present invention;
Figure 5 shows a block diagram of an example data processing device; and
Figure 6 shows a flow diagram of a computer implemented method of detecting anomalous activity in a financial transaction system according to the present invention.

### DETAILED DESCRIPTION

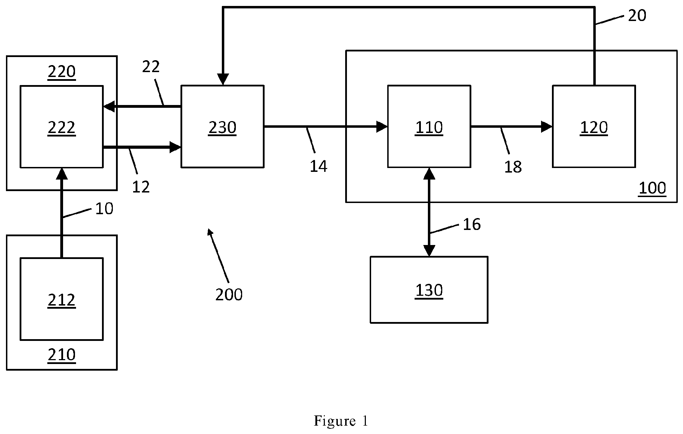

With reference to Figure 1, an example of a device 100 for detecting anomalous activity in financial transactions is shown. The anomalous activity detection device 100 is provided as part of a system 200 for processing financial transactions. The anomalous activity detection device 100 comprises an interaction rate module 110 and an anomalous activity module 120, the operation of which is discussed further below.

The financial transaction processing system 200 may be used to facilitate financial transactions between a first entity 210 (e.g., a consumer) and a second entity 220 (e.g., a merchant). For example, the financial transaction processing system 200 may be a card-payment system, wherein a first transaction is initiated 10 by the first entity 210 presenting a payment card 212 to a payment terminal 222 of the second entity 220. During the initiation 10 of the transaction, payment details including a first entity identifier may be transferred from the first entity to the second entity (e.g., a card number or a bank account number of the first entity).

However, it will be understood that the financial transaction processing system 200 may be any suitable system. For example, the first transaction may be remote; the first entity 210 may utilise a computing device (e.g., a personal computer or smartphone) in place of a payment card 212, with payment details being communicated via the internet to a server of the second entity 220 rather than a physical payment terminal 222. Thus, such a financial transaction processing system 200 may facilitate online purchase or transfers instead of, or in addition to, in-person consumer-merchant interactions.

Upon initiation 10 of the first transaction, the second entity 220 generates and sends 12 a first transaction request message comprising transaction details for the first transaction. The transaction details comprise the first entity identifier and a second entity identifier (e.g., a merchant ID or a bank account number for the second entity). The transaction details may include further details that are usually found in transaction requests for known systems, such as a time/date of the first transaction and a transaction amount. The transaction request message may be a known transaction request message - i.e. the first entity identifier and second entity identifier may be details found in transaction requests of a known system.

The financial transaction processing system 200 may comprise a payment network 230. The first transaction request message may be sent via the payment network 230, being forwarded 14 in the process. The payment network 230 may be operated by a card payment network provider, for example. Preliminary analysis/processing of the first transaction request message may be done by the payment network; the payment network may check that a PIN entered by the first entity 210 matches an expected PIN for payment card 212, for example. However, the skilled person will understand that any suitable payment network may be used to facilitate the first transaction. An application programming interface (API) may be used to communicate the first transaction request message to the payment network 230 and/or anomalous activity detection device 100, for example. The anomalous activity detection device 100 and the payment network 230 may be operated by the same party, meaning that there is no intermediary for the first transaction request message like shown in Figure 1.

The interaction rate module 110 receives the first transaction request message (including the first entity identifier and the second entity identifier). The interaction module 110 compares the first and/or second entity identifier to a database 130 representing previous transactions and determines a first probabilistic unique interaction rate for the first entity (discussed further below). The first probabilistic unique interaction rate is passed 18 to the anomalous activity module 120.

Using, at least in part, the first probabilistic unique interaction rate, the anomalous activity module 120 determines a likelihood parameter that the first transaction is anomalous (e.g., fraudulent). Based on this likelihood parameter, the anomalous activity module 120 generates and sends 20 a first transaction response message. The first transaction response message depends on whether the anomalous activity module 120 considers the first transaction to be anomalous or not and therefore, in turn, whether the first transaction should be continued with. **In** the event that the first transaction is considered to be anomalous, the first transaction response message may comprise an indication/instruction that the transaction should be prevented or blocked. Alternatively, in the event that the first transaction is considered to be non - anomalous/normal, the first transaction response message may comprise an indication/instruction to proceed with the transaction. The transaction response message may be a known transaction response message - e.g., the anomalous activity module 120 may modify or generate transaction responses formatted to be used by a known system.

Similar to above, the first transaction response message may be forwarded 22 by the payment network to the second entity 220. Upon receipt of the transaction response message, the payment terminal 222 may provide an indication to the second entity 220 and/or first entity 210 that the first transaction has been completed or declined.

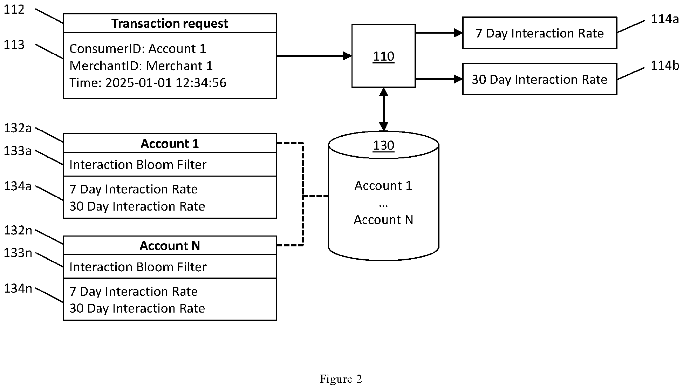

Referring to Figure 2, further details of the processes undertaken at the interaction rate module 110 are shown. As discussed above, the interaction rate module 110 receive s a first transaction request message 112 related to the first transaction between a first entity and a second entity. The first transaction request message 112 comprises transaction details 113 including a first entity identifier and a second entity identifier. In this example, the first entity identifier (ConsumerID) is Account 1; this could be a consumer bank account number or a payment card number, for example. The second entity identifier (MerchantID) is Merchant 1; this could be a merchant bank account number or a merchant number/username, for example. The transaction details 113 also comprise a first transaction time (Time); e.g., a time and date at which the first transaction was initiated.

Using the transaction information 113, the interaction rate module 110 compares this information to a database 130 representing previous transactions in order to determine if the entities have interacted previously or whether the interaction between the first and second entity is a new, unique interaction. The comparison may be performed by comparing entity identifiers to sets of 'states'.

In the example of Figure 2, the database is a database of consumer states; the database 130 comprises a state for each first entity/consumer identifier Account 1 to Account N. Thus, the database 130 can keep track of how many unique second entities/merchants each first entity/merchant interacts with. Each state 132a-n has a unique Bloom filter 133a-n and at least one previous exponential decay rate 134a-n (the Bloom filter and the decay rate being discussed further below). Thus, in this example, the interaction rate module 110 will, using the first entity/consumer identifier Account 1, call the state 132a associated with Account 1. The second entity/merchant identifier Merchant 1 is then applied to the Bloom filter 133a and the status of the Bloom filter 133a is retrieved If Account 1 has not previously interacted with Merchant 1 (i.e., this is a unique interaction), the status will be a '1'. Otherwise, the status will be a '0'. The previous exponential decay rate(s) 134a is also retrieved. In this example, a 7-day and a 30-day previous exponential decay rate are stored in the Account 1 state 132a. The state 132a may store additional information including interaction rate dependent data, that may also be retrieved via this comparison stage (not shown).

Using this state-based comparison, and the first and second entity identifiers that have been received, the interaction rate module 110 is able to retrieve information from the database 130 indicating if the first entity has interacted with the second entity previously, and the interaction rate of the first entity. If the first entity were different, having first entity identifier Account N, corresponding state 132n would be retrieved.

Additional comparisons may also be done, involving further Bloom filters and/or further states. In the example above, the Bloom filter tracks which MerchantIDs the ConsumerID has interacted with (i.e., has Account 1 interacted with Merchant 1). However, the state 132a may comprise further Bloom filters, or the Bloom filter could relate to more than one type of first entity/consumer identifier and/or second entity/merchant identifier. For example, the transaction information 113 may also comprise a merchant email address. Thus, two Bloom filters could be provided - one tracking which merchant email addresses the ConsumerID has interacted with and one tracking which MerchantIDs the ConsumerID has interacted with, as above. Additionally, or alternatively, the database 130 may comprise merchant states; a state for each second entity/merchant identifier Merchant 1 to Merchant N. Thus, in contrast to above, the comparison can determine how many unique first entities/consumers each second entity/merchant interacts with. Each merchant state may also comprise one or more previous exponential decay rates. Using the additional Bloom filters or 'bi-directional' comparison, the determination of whether the interaction between the first entity and the second entity is new may be more accurate. For example, only if all the Bloom filter statuses are 1 will the interaction be deemed unique.

Using the retrieved information from the database 130, the interaction rate module 110 can determine a first probabilistic unique interaction rate for the first entity, the first probabilistic unique interaction rate representing a probability that the first entity interacts with a new entity in a first time period. The probabilistic unique interaction rate may be determined by using an exponential decay function to update the previous exponential decay rate retrieved from the state 132a in light of the new, first transaction that has been initiated. The exponential decay function may be of the form $y ′ = x + y ∗ exp \left(-\frac{Δ t}{{T}_{1}}\right)$ (1) wherein y is the previous exponential decay rate, x is the status of the Bloom filter (1 or 0) and *y'* is the updated exponential decay rate. Δ*t* is the elapsed time since the exponential decay rate was last updated. The elapsed time may be calculated by finding the difference between the first transaction time (received in the transaction information 113) and a previous update time retrieved from the state 132a stored in the database 130 (not shown). *T*₁ is the time period across which the probabilistic unique interaction rate and determines the decay rate. The elapsed time Δ*t* and time period *T*₁ are provided in the same unts (or otherwise converted). For example, where seconds are used, the time period *T*₁ for a 7-day exponential decay rate would be 7 days x 24 hours x 60 minutes x 60 seconds = 604,800 seconds.

Likewise, a 30-day exponential decay rate may be updated using the same exponential decay function (1); the Bloom filter status x and the elapsed time Δ*t* will be the same as above, but the previous exponential decay rate *y* is the retrieved 30-day previous exponential decay rate and the time period is a 30-day time period *T*₂ accordingly. Similarly, exponential decay rates for the second entity can be determined in the same way. The updated exponential decays rates may be saved back into the database 130 so that the probabilistic unique interaction rate of the first entity and/or the second entity is iteratively tracked.

Thus, the interaction rate module 110 can determine probabilistic unique interaction rates and output the calculated exponential decay rates accordingly. In this example, an updated 7-day exponential decay rate 114a and an updated 30-day exponential decay rate 114b are output. By analysing the decay rate function (1) above, the exponential decay rates may be regarded as weighted sums, where each individual contribution (a new transaction) gets progressively smaller in weight over time. Each time a new, unique interaction occurs a 1 is added to the exponential decay rate by virtue of the Bloom filter status x. The decay rate function (1) converts the weighted sum of unique interactions into a rate by virtue of the time factor that is incorporated into the weight. The updated exponential decay rates 114a,b therefore provide an indication of the rate at which the first entity interacts with new, unique second entities/merchants. The interaction rates may be referred to as 'probabilistic' because they are not merely the number of unique interactions per a given time period. Instead, the interaction rate is represented in the weighting of the exponential function.

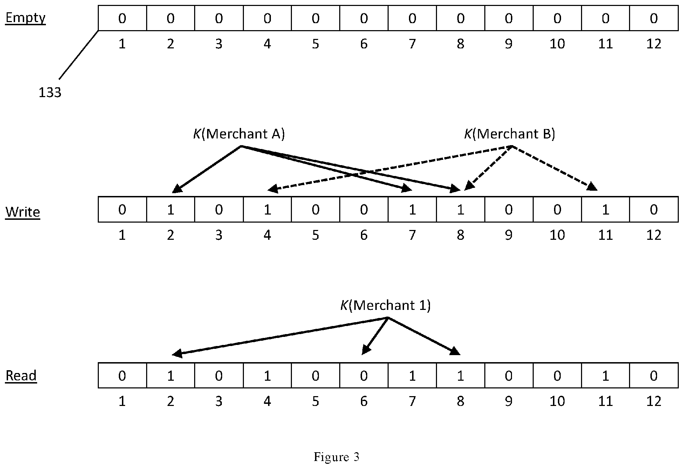

Referring to Figure 3, a simplified explanation of a Bloom filter-based data storage protocol that may be used in the present invention is provided. At the top of Figure 3, an empty Bloom filter array 133 is provided. The array 133 comprises *m* bits, all set to 0. In this example, *m* = 12.

In the centre of Figure 3, a simplified writing procedure is show, where by data is stored in the Bloom filter array. A set of hash functions *K* (the set *K* comprising *k* hash functions) are applied to each data value that is to be stored in the Bloom filter. In this instance, *K* is applied to two different MerchantIDs - 'Merchant A' and 'Merchant B'. Each hash function in the set *K*, when applied to the input data value, will output a hashed value. The corresponding bit of the Bloom filter array is then set to 1. In this example, the hash function set *K* comprises three hash functions *k*₁, *k*₂ and *k*₃. When applied to the MerchantIDs, the outputs are: ${k}_{1} \left(Merchant A\right) = 1$ ${k}_{2} \left(Merchant A\right) = 8$ ${k}_{3} \left(Merchant A\right) = 7$ ${k}_{1} \left(Merchant B\right) = 11$ ${k}_{2} \left(Merchant B\right) = 4$ ${k}_{3} \left(Merchant B\right) = 8$

Accordingly, the bits 1, 4, 7, 8 and 11 are set to 1 in the Bloom filter array. For improved efficiency, the hash functions K may be independent of one another and uniformly distributed. In order to enable fast data storage/retrieval, the hash functions may be simple, fast hashes (e.g., non-cryptographic hashes). The skilled person will understand that the hash functions may be any suitable hash function, for example a murmur hash, a Fowler-Noll-Vo (FNV) hash or a Jenkins hash.

At the bottom of Figure 3, a simplified read or retrieval procedure is shown. This can be used, as discussed above, to check whether a data value (e.g., the MerchantID 'Merchant 1', provided via a transaction request message) is stored in the Bloom filter. Where the Bloom filter is for a consumer account (like Account 1 discussed above), the Bloom filter can therefore be used to determine if the interaction with this MerchantID is a new, unique interaction. As in the write procedure, the set of hash functions K is applied to the MerchantID. In this example, K(Merchant 1) = {2, 6, 8}. The hashed outputs are then compared to the Bloom filter array, and it is found that at least one bit (number 6), is a 0. This means that Merchant 1 is not stored in the Bloom filter array and therefore, with 100% certainty (at least for the transaction data that is stored in the array), this interaction is unique. The write procedure may then be used to added 'Merchant 1' to the Bloom filter array.

As discussed above, multiple Bloom filters may be used. For example, each state 132 in the database 130 shown in Figure 2 may comprise a Bloom filter. Thus, each Bloom filter will track interactions of the first entity (e.g., a consumer) with a particular identifier of a second entity (e.g., MerchantIDs of merchants). Each state may comprise multiple Bloom filters. For example, each consumer state may comprise a first Bloom filter for storing MerchantIDs as above, and a second Bloom filter array for storing email addresses. Alternatively, different types of entity identifiers could be stored in the same Bloom filter array. So long as the array is sized appropriately and the hashes are suitable, MerchantIDs and email addresses could be stored in one Bloom filter array, for example.

The use of a Bloom filter for entity identifier storage/comparison may be regarded as probabilistic due to the possibility of false positives. As above, via the read procedure, one can determine with 100% certainty that an entity identifier is not in the array (by virtue of at least one bit being 0). However, it is possible for all bits to be 1 despite the entity identifier not being in the array - K(Merchant 1) may have, by chance, output {1, 7, 8} for example. One can therefore only say that the entity identifier *may* be in the array. Nonetheless, for the purposes of determining a probabilistic unique interaction rate, a Bloom filter may represent a suitably reliable and efficient means for storing the entity identifier data.

The frequency of false positives will increase as the Bloom filter array becomes more full. At its limit, where all bits are set to 1, any hashed input will return all 1s. The skilled person will understand that a Bloom filter like that described above can be optimised by configuring the size of the array *m* and the number of hash functions *k* appropriately. Alternatively, the Bloom filter may be an automatically resizing Bloom filter.

The probability P of a false positive may be approximated as $P = {\left(1-{\left(1-\frac{1}{m}\right)}^{kn}\right)}^{k}$ (2) where, *n* is the number of entries (e.g., saved entity identifiers) and as above, *m* is the size of/number of bits in the array and *k* is the number of hash functions.

Using this approximation, the number of bits *m* in the array needed to achieve a desired false positive rate *P₁* is $m = - \frac{n ln {P}_{1}}{{\left(ln 2\right)}^{2}} .$ (3)

Similarly, the optimum number of hash functions *k* is $k = \frac{m}{n} ln 2 .$ (4)

The number of expected entries n may be estimated ahead of time using sample data, for example. Evidently, the number n of unique entity identifiers stored in the array (e.g., number of MerchantIDs) will be dependent on the total number transactions that the entity (e.g., consumer) takes part in, which will depend upon the time period in question. More entity identifiers will be stored in a 2-year period than a 3- day period, for example. Thus, the number of bits m/size of array may be sized appropriately for the interaction rate durations of interest.

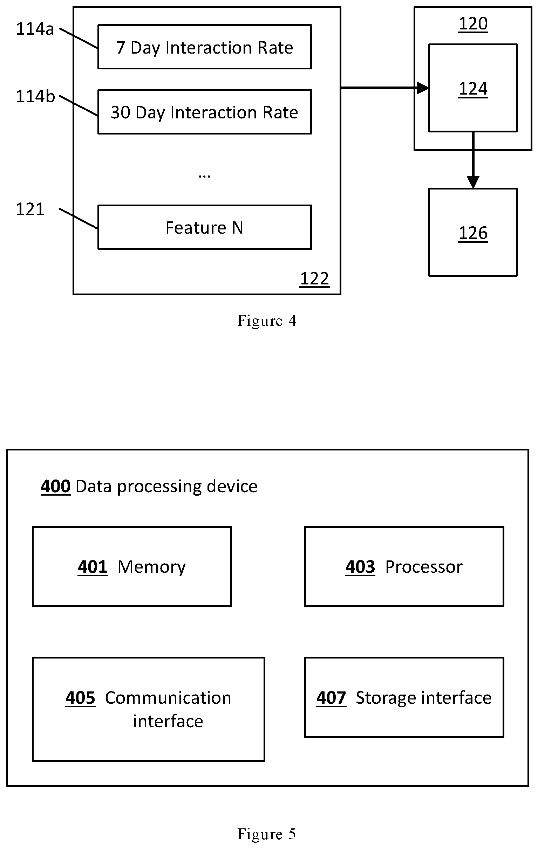

Referring to Figure 4, further details of the processes undertaken at the anomalous activity module 120 are shown. Exponential decay rates 114a,b (see description of Figure 2 above) are provided to the anomalous activity module as part of a feature vector 122. The feature vector 122 may comprise one or more further features/parameters 121 that are provided in addition to the exponential decay rates 114a,b. The additional parameters 121 may comprise 'raw' data related to the first transaction, e.g., information contained in the transaction request message, such as a transaction amount; or data retrieved from other databases, such as an age of the account in question. Additionally, or alternatively, the additional parameters 121 may be determined in parallel to the exponential decay rates using other transaction-screening processes. The feature vector 121 comprises a vectorised set of all the features of interest that are provided to the anomalous activity module 120.

The anomalous activity module 120 may comprise a machine learning (ML) model 124. The ML model 124 may be any suitable ML model that is configured to identify patterns in datasets. The ML model 124 may be implemented using a convolutional neural network (CNN), for example. The ML model 124 may be trained using sample financial transaction data. The sample financial transaction data may comprise labelled data, e.g., known anomalous transactions, enabling the ML model 124 to learn to recognise anomalous activity using, amongst other things, the determined exponential decay rates 114a,b. In a very simple example, if the rate of unique interactions over the previous 7 days is much higher than the rate of unique interactions of the previous 30 days (i.e., the ratio of the 7-day probabilistic decay rate and the 30-day probabilistic decay rate is close to 1), for example, this may indicate anomalous activity. If there have been X unique interactions over the previous 30 days, all of which happen to be in the previous 7 days, the interaction rate over the past 7 days (X/7 days) will be greater than the interaction rate over the previous 30 days (X/30 days).

Using the ML model 124, the anomalous activity module 120 determines a likelihood parameter, the likelihood parameter indicating the likelihood that the first transaction is anomalous. The likelihood parameter may be between 0 and 1, for example, said parameter being the confidence determined by the ML model 124 that the first transaction falls within an anomalous activity classification. Based on this likelihood parameter, the anomalous activity module 120 can determine whether the first transaction is anomalous and, accordingly, whether to proceed with the transaction or not. The likelihood parameter may be compared to a predetermined threshold value (e.g., 0.5). Using this determination, the anomalous activity module 120 generates a first transaction response message 126 indicting whether the first transaction should be prevented or continued with. The first transaction response message 126 may be provided to the first entity and/or the second entity for them to take appropriate action, as discussed above in relation to Figure 1.

It will be appreciated that any of the methods described herein, and any step of the methods, can be implemented by a computer. Such implementation may take the form of a processor executing instructions stored on a non-transitory computer-readable medium or media, wherein when executed the instructions cause the processor to perform any one or more steps of any of the methods described herein. Individual steps of any method may be implemented by different processors that are all collectively acting in accordance with computer-readable instructions stored on one or more storage media. The processor(s) may be component(s) of system, for example a processor of a device.

Similarly, any steps of any of the methods described herein may be performed by data processing devices. By way of example, Figure 5 shows, in schematic form, a data processing device 400 that is suitable for performing the method of processing for detecting an anomalous activity in a financial transaction system, or any of the steps/processes therein. The data processing device 400 may automatically perform any of the methods described herein.

One or more such data processing devices 400 may be provided for implementing the method of the present invention. For example, each of a first entity device (for example, a personal computer or smartphone), a second entity device (for example, a payment terminal), an interaction rate module, an anomalous activity module and/or a payment network may comprise a data processing device 400. Distinct data processing devices 400 may be used for various steps/processes of the method described herein. Said devices may be networked together appropriately to enable any of the methods described herein.

Data processing device 400 includes a processor 403 for executing instructions. Instructions may be stored in a memory 401. Processor 403 may include one or more processing units (e.g., in a multi-core configuration) for executing instructions. The instructions may be executed within a variety of different operating systems on the data processing device 400, such as UNIX, LINUX, Microsoft Windows^{®}, etc. More specifically, the instructions may cause various data manipulations on data stored in memory 401 (e.g., create, read, update, and delete procedures). It should also be appreciated that upon initiation of a computer-implemented method, various instructions may be executed during initialization. Some operations may be required to perform one or more methods described herein, while other operations may be more general and/or specific to a particular programming language (e.g., C, C#, C++, Java, or other suitable programming languages, etc.).

Processor 403 is operatively coupled to a communication interface 405 such that data processing device 400 can communicate with a remote device, such as another data processing device of the system. For example, communication interface 405 may receive communications from another member of the system.

Processor 403 may also be communicatively coupled to a storage device such as a database, depending on the function of data processing device 400 within the context of the system. The storage device is any computer-operated hardware suitable for storing and/or retrieving data, where in the case of a secure storage medium the data is stored and retrieved securely.

The storage database may, for example, store details of the transaction (e.g., the payment amount, the details of the card used in the transaction, the identities of each entity involved in the transaction), and it can be external to data processing device 400 and located remotely. Alternatively, it can be integrated in data processing device 400. For example, data processing device 400 may include memory 401 as one or more hard disk drives acting as a storage database. Alternatively, where the storage database is external to data processing device 400, it can comprise multiple storage units such as hard disks or solid-state disks in a redundant array of inexpensive disks (RAID) configuration. The storage database may include a storage area network (SAN) and/or a network attached storage (NAS) system. In some arrangements, the system and methods may be deployed in a cloud-based environment.

Processor 403 can be operatively coupled to the storage device (storage database) via a storage interface 407. Storage interface 407 is any component capable of providing processor 403 with access to the storage device. Storage interface 407 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 403 with access to the storage device.

Memory 401 may include, but is not limited to, RAM such as dynamic RAM (DRAM) or static RAM (SRAM), ROM, erasable programmable read-only memory (EPROM), electrically erasable programmable read-only memory (EEPROM), and non-volatile RAM (NVRAM). The above memory types are exemplary only and are not limiting as to the types of memory usable for storage of a computer program.

As used herein, the term "non-transitory computer-readable media/medium" is intended to be representative of any tangible computer-based device implemented in any method or technology for short-term and long-term storage of information, such as, computer-readable instructions, data structures, program modules and sub -modules, or other data in any device. The methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Furthermore, as used herein, the term "non-transitory computer-readable media/medium" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the specification herein, the above -described embodiments of the disclosure may be implemented using computer programming or engineering techniques including computer software, firmware, hardware or any combination or subset thereof. Any such resulting program, having computer-readable code means, may be embodied, or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

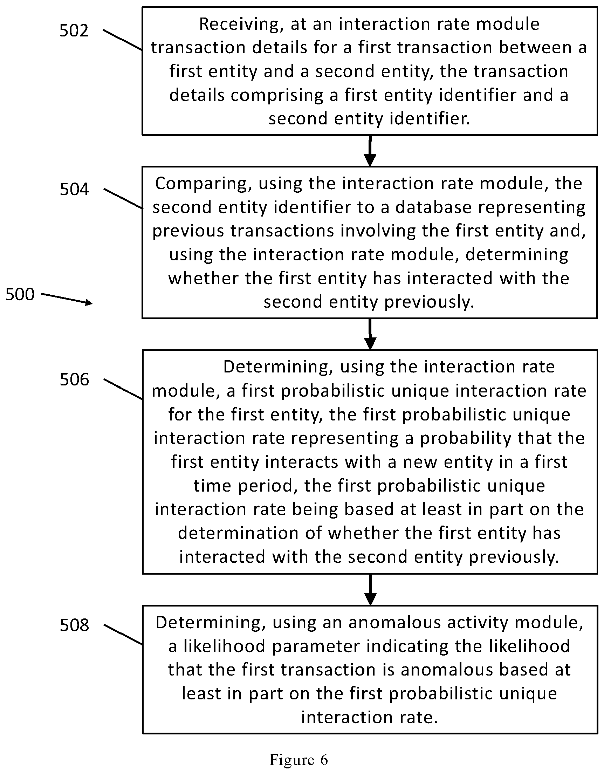

Referring to Figure 6, a flow diagram 500 of a computer implemented method for detecting an anomalous activity in a financial transaction system is shown. Said method may be performed by the entities/systems described above in relation to Figures 1 to 5.

At step 502, the method involves receiving, at an interaction rate module transaction details for a first transaction between a first entity (e.g., a consumer) and a second entity (e.g., a merchant), the transaction details comprising a first entity identifier and a second entity identifier.

At step 504, the method involves comparing, using the interaction rate module, the second entity identifier to a database representing previous transactions involving the first entity and, using the interaction rate module, determining whether the first entity has interacted with the second entity previously.

At step 506, the method involves determining, using the interaction rate module, a first probabilistic unique interaction rate for the first entity, the first probabilistic unique interaction rate representing a probability that the first entity interacts with a new entity in a first time period, the first probabilistic unique interaction rate being based at least in part on the determination of whether the first entity has interacted with the second entity previously.

At step 508, the method involves determining, using an anomalous activity module, a likelihood parameter indicating the likelihood that the first transaction is anomalous based at least in part on the first probabilistic unique interaction rate.

Although specific examples have been described, the skilled person will appreciate that variations are possible, within the scope of the invention, which should be determined with reference to the accompanying claims.

## Claims

1. A computer implemented method for detecting an anomalous activity in a financial transaction system, the computer implemented method comprising:
receiving, at an interaction rate module, transaction details for a first transaction between a first entity and a second entity, the transaction details comprising a first entity identifier and a second entity identifier;
comparing, using the interaction rate module, the second entity identifier to a database representing previous transactions associated with the first entity identifier and, using the interaction rate module, determining whether the first entity has interacted with the second entity previously;
determining, using the interaction rate module, a first probabilistic unique interaction rate for the first entity, the first probabilistic unique interaction rate representing a probability that the first entity interacts with a new entity in a first time period, the first probabilistic unique interaction rate being based at least in part on the determination of whether the first entity has interacted with the second entity previously; and
determining, using an anomalous activity module, a likelihood parameter indicating the likelihood that the first transaction is anomalous based at least in part on the first probabilistic unique interaction rate.

2. The computer implemented method of claim 1, wherein the transaction details are comprised in a first transaction request message associated with the first transaction, the method further comprising:
determining, based on the likelihood parameter, whether to allow the first transaction to be completed;
if it is determined that the first transaction should not be completed, generating, using the anomalous activity module, a first transaction response message comprising an instruction to prevent the first transaction; and/or
if it is determined that the first transaction should be completed, generating, using the anomalous activity module, a first transaction response message comprising an instruction to proceed with the first transaction.

3. The computer implemented method of claim 1 or claim 2, wherein determining the first probabilistic unique interaction rate for the first entity comprises calculating a first exponential decay rate.

4. The computer implemented method of claim 3, further comprising retrieving, using the interaction rate module, a first previous exponential decay rate from the database representing previous transactions associated with the first entity identifier;
wherein calculating the first exponential decay rate comprises updating the previous exponential decay rate to reflect the first transaction.

5. The computer implemented method of claim 4, wherein:
the method further comprises retrieving, using the interaction rate module, a first previous update time from the database representing previous transactions associated with the first entity identifier, the first previous update time indicating when the first previous exponential decay rate was last updated;
wherein the transaction details for the first transaction comprise a first transaction time indicating when the first transaction occurred; and
wherein the first exponential decay rate is calculated based upon a ratio of a first elapsed time and the first time period, the first elapsed time being the difference between the first previous update time and the first transaction time.

6. The computer implemented method of claim 5, wherein the first exponential decay rate is calculated using an exponential decay function of the form y' = x + y*exp( - Δt / T₁), wherein y' is the first exponential decay rate, x is a value indicating whether the first entity has interacted with the second entity previously, y is the first previous exponential decay rate, Δt is the first elapsed time and T₁ is the first time period.

7. The computer implemented method of any preceding claim, further comprising determining, using the interaction rate module, a second probabilistic unique interaction rate for the first entity, the second probabilistic unique interaction rate representing a probability that the first entity interacts with a new entity in a second time period, the second probabilistic unique interaction rate being based at least in part on the determination of whether the first entity has interacted with the second entity previously;
wherein the first time period and the second time period are different; and
wherein the likelihood parameter is based at least in part on the second probabilistic unique interaction rate.

8. The computer implemented method of any preceding claim, wherein determining whether the first entity has interacted with the second entity previously comprises retrieving a status of a first entity Bloom filter from the database representing previous transactions associated with the first entity identifier, wherein the first entity Bloom filter represents a set of entities that the first entity has previously interacted with.

9. The computer implemented method of claim 8 when dependent on claim 6, wherein:
the status of the first entity Bloom filter is a 1 if the first entity has not previously interacted with the second entity;
the status of the first entity Bloom filter is a 0 otherwise; and
the status of the first entity Bloom filter is used as the value, x, indicating whether the first entity has interacted with the second entity previously in the exponential decay function; and optionally
the computer implemented method further comprising, if the status of the first entity Bloom filter is 1, updating the first entity Bloom filter to include the second entity identifier.

10. The computer implemented method of claim 8 or 9, when dependent upon claim 7, wherein the status of the first entity Bloom filter is used in determining both the first probabilistic unique interaction rate and the second probabilistic unique interaction rate.

11. The computer implemented method of any preceding claim, further comprising:
comparing the first entity identifier to a database representing previous transactions associated with the second entity identifier and, using the interaction rate module, determining whether the second entity has interacted with the first entity previously; and
determining, using the interaction rate module, a third probabilistic unique interaction rate for the second entity, the third probabilistic unique interaction rate representing a probability that the second entity interacts with a new entity in a third time period, the third probabilistic unique interaction rate being based at least in part on the determination of whether the second entity has interacted with the first entity previously;
wherein the likelihood parameter is based at least in part on the third probabilistic unique interaction rate.

12. The computer implemented method of any preceding claim, wherein the transaction details for the first transaction comprise a plurality of second entity identifiers, the method further comprising:
comparing each of the second entity identifiers to the database representing previous transactions associated with the first entity identifier and, using the interaction rate module, individually determining whether the first entity has interacted with the second entity previously based on each of the second identity identifiers; and
determining, using the interaction rate module, a plurality of probabilistic unique interaction rates for the first entity, each probabilistic unique interaction rate representing a probability that the first entity interacts with a new entity in a predetermined time period, the each probabilistic unique interaction rate being based at least in part on the determination of whether the first entity has interacted with the second entity previously based on the respective second entity identifier of the plurality of second entity identifiers; and
wherein the likelihood parameter is based at least in part on each probabilistic unique interaction rate of the plurality of probabilistic unique interaction rates ; and optionally
wherein the plurality of second identity identifiers comprise:
an email address associated with the second entity;
a transaction currency associated with the second entity;
a payment method associated with the second entity; and/or
a geographic location associated with the second entity.

13. The computer implemented method of any preceding claim, the method further comprising:
receiving, at the interaction rate module, transaction details for a second transaction between the first entity and a third entity, the transaction details comprising the first entity identifier and a third entity identifier;
comparing the third entity identifier to the database representing previous transactions associated with the first entity identifier and, using the interaction rate module, determining whether the first entity has interacted with the third entity previously;
determining, using the interaction rate module, a fourth probabilistic unique interaction rate for the first entity, the fourth probabilistic unique interaction rate representing a probability that the first entity interacts with a new entity in a first time period, the fourth probabilistic unique interaction rate being based at least in part on the determination of whether the first entity has interacted with the third entity previously; and
determining, using the anomalous activity module, a second likelihood parameter indicating the likelihood that the second transaction is anomalous based at least in part on the fourth probabilistic unique interaction rate.

14. The computer implemented method of any preceding claim, wherein the anomalous activity module comprises a machine learning model trained to determine the likelihood that a transaction is anomalous based upon parameters of the transactions and/or the entities involved therein, the parameters including the first probabilistic unique interaction rate; and optionally
wherein in the first probabilistic unique interaction rate is provided to the machine learning model as part of a first transaction feature vector; and further optionally
wherein the first transaction feature vector comprises one or more additional parameters of the transactions and/or the entities involved therein that have been determined in parallel to the first probabilistic unique interaction rate.

15. A device for detecting an anomalous activity in a financial transaction system, the device comprising:
an interaction rate module configured to:
receive transaction details for a first transaction between a first entity and a second entity, the transaction details comprising a first entity identifier and a second entity identifier;
compare the second entity identifier to a database representing previous transactions associated with the first entity identifier and determine whether the first entity has interacted with the second entity previously; and
determine a first probabilistic unique interaction rate for the first entity, the first probabilistic unique interaction rate representing a probability that the first entity interacts with a new entity in a first time period, the first probabilistic unique interaction rate being based at least in part on the determination of whether the first entity has interacted with the second entity previously; and
an anomalous activity module configured to:
determine the likelihood that the first transaction is anomalous based at least in part on the first probabilistic unique interaction rate.
